(19) Europäisches Patentamt
European Patent Office
Office européen des brevets

(11) Publication number: **0 126 397 B1**

(12) # EUROPEAN PATENT SPECIFICATION

(45) Date of publication of patent specification: **06.09.89**

(51) Int. Cl.$^4$: **C 07 C 69/54**, C 08 F 220/30

(21) Application number: **84105367.1**

(22) Date of filing: **11.05.84**

(54) **Naphthalene derivative, polymerizable composition containing the same and polymer obtainable by polymerizing this composition.**

(30) Priority: **20.05.83 JP 87545/83**
**17.06.83 JP 107952/83**

(43) Date of publication of application:
**28.11.84 Bulletin 84/48**

(45) Publication of the grant of the patent:
**06.09.89 Bulletin 89/36**

(84) Designated Contracting States:
**BE DE FR GB IT**

(56) References cited:
**DE-A-2 647 890**
**DE-A-3 215 932**
**GB-A-1 043 503**
**GB-A-1 407 813**
**US-A-2 458 888**

**CHEMICAL ABSTRACTS, vol. 83, 1975, page 17, column 1, abstract no. 206781c, Columbus, Ohio, US; & JP - A - 75 76 034 (NIPPON OILS AND FATS CO. LTD.) 21-06-1975**

(73) Proprietor: **SHOWA DENKO K.K.**
**13-9, Shiba Daimon 1-chome**
**Minato-ku, Tokyo 105 (JP)**

(72) Inventor: **Yoshida, Haruo**
**S19-308 Akenokitamachi**
**Ooita-shi Ooita-ken (JP)**
Inventor: **Tagoshi, Hirotaka**
**Hokai-ryo 1866-1 Oaza Misa**
**Ooita-shi Ooita-ken (JP)**

(74) Representative: **Schübel-Hopf, Ursula et al**
**Strehl Schübel-Hopf Groening Schulz**
**Patentanwälte Maximilianstrasse 54 Postfach 22 14 55**
**D-8000 München 22 (DE)**

(56) References cited:
**CHEMICAL ABSTRACTS, vol. 87, 1977, page 16, column 2, abstract no. 102880a, Columbus, Ohio, US; A.I. MEDVEDEV et al.: "Standard methods of producing sulfur-containing stabilizers", & IZV. VYSSH. UCHEBN. ZAVED. KHIM. KHIM. TEKHNOL. 1977, 20(4), 568-74**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 126 397 B1

Courier Press, Leamington Spa, England.

(56) References cited:
CHEMICAL ABSTRACTS, vol. 104, 1986, page 42, column 1, abstract no. 20410c, Columbus, Ohio, US; & JP - A - 60 144 701 (SHOWA DENKO K.K.) 31-07-1985

PATENTS ABSTRACTS OF JAPAN, vol. 9, no. 108 (C-280)1831r, 11th May 1985; & JP - A - 60 1213 (SHOWA DENKO K.K.) 07-01-1985

## Description

### Background of the Invention

1. Field of the Invention

The present invention relates to a naphthalene derivative and a polymerizable composition containing the same. More specifically, it relates to a polymerizable naphthalene derivative monomer suitable for use in the preparation of a resin hving a high refractive index (e.g., 1.58 or more) and having high speed moldability.

2. Description of the Prior Art

Various polymers, such as polymethylmethacrylate, polystyrene polycarbonate, and diethylene glycol diallyl carbonate, are utilized for the production of so-called "organic glass". Offering the advantages of lightness, safety (i.e., hard to break), good workability, and good dyeing properties, such organic glass is finding application in numerous fields. Particularly promising has been its use for spectacle lenses.

A polymer of diethyleneglycol diallyl carbonate, however, has a low refractive index (e.g., 1.499). Therefore an organic spectacle lens naturally becomes thick as compared with an inorganic spectacle lens.

Polystyrene and polycarbonate have high refractive indices i.e., 1.59, but have poor solvent resistance. Also, since these resins are thermoplastic, molding strain tends to remain upon injection molding, which is mainly used in the formation of spectacle lenses. To overcome this latter problem, various methods have been proposed to heat-cure the polymerizable monomers, as disclosed in, for example, Japanese Unexamined Patent Publication (Kokai) Nos. 55—13747, 56—61411, 56—61412, 57—2311, 57—2312, 57—23611, 57—28115, 57—28116, 57—28117, and 57—28118. According to these prior arts, homogeneous mixtures of monomer compositions and polymerization initiators are first injected into casting molds and are then thermally polymerized for a long time (e.g., 10 hours in one cycle) to obtain the desired cured products, which thus have no optical distortion. However, these methods are disadvantageous in that many casting molds are required due to the low efficiency in use (i.e., the long cycle time, and in the thermal energy required for the long-time thermal polymerization. Thus, the productivity is extremely low.

Many of these monomers have an aromatic ring. However, crystals tend to precipitate at room temperature in the presence of other copolymerizable monomers due to the low solubility of the monomers. As a result, the copolymers have poor weathering resistance and are sometimes difficult to dye.

Summary of the Invention

Accordingly, an object of the present invention is to eliminate the above-mentioned disadvantages in the prior art and to provide a curable monomer having an extremely high refractive index, a high boiling point, non-toxicity, easy handling properties, good compatibility with other copolymerizable monomers, and excellent curability.

Another object of the present invention is to provide a polymerizable composition capable of producing resins having a high refractive index, excellent surface hardness, solvent resistance, thermal resistance, impact resistance, and dyeing properties at an extremely short curing time.

Other objects and advantages of the present invention will be apparent from the following description.

In accordance with the present invention, there is provided a naphthalene derivative having the general formula:

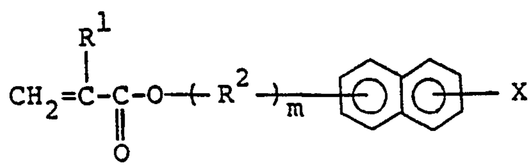

(I′)

wherein $R^1$ is H or $CH_3$, $R^2$ is $—CH_2CH_2O—$, $—CH(CH_3)CH_2O—$, or $—CH_2CH(OH)CH_2O—$, X is H, Cl, Br, $CH_3$, $CH_3O$, $C_6H_5$, or $C_6H_5O$, and m is an integer of 1 to 3.

In accordance with the present invention, there is also provided a polymerizable composition suitable for use in the preparation of a high refractive index resin comprising: (A) 30% to 95% by weight of at least one monomer having the general formula:

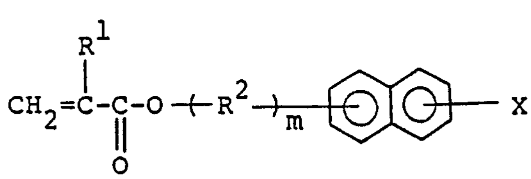

(I)

wherein $R^1$ is H or $CH_3$, $R^2$ is $—CH_2CH_2O—$, $—CH(CH_3)CH_2O—$, or $—CH_2CH(OH)CH_2O—$, X is H, Cl, Br, $CH_3$,

$CH_3O$, $C_6H_5$, or $C_6H_5O$, and m is an integer of 1 to 3 (provided that, in the case of $R^2$ = $—CH_2CH(OH)CH_2O$, m is preferably 1); (B) 0% to 65% by weight of at least one monomer having the general formula

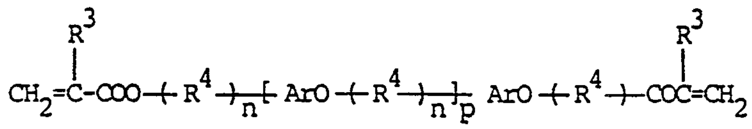

(II)

wherein $R^3$ is H or $CH_3$, $R^4$ is $—CH(CH_3)CH_2O—$, $—CH_2CH_2O—$ or $—CH_2CH(OH)CH_2O—$, Ar is a bivalent phenol residue, n is an integer of 1 to 3, p is an integer of 0 to 4, provided that p = 0 in the case of $R^4$ = $—CH_2CH_2O—$ or $—CH(CH_3)CH_2O—$ (furthermore, in the case of $R^4$ = $—CH_2CH(OH)CH_2O—$, n is preferably 1); and (C) 5% to 30% by weight of at least one monomer having a refractive index of at least 1.450 and having the general formula:

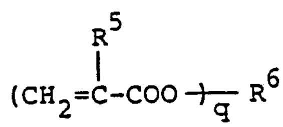

(III)

wherein $R^5$ is H or $CH_3$, $R^6$ is a saturated aliphatic hydrocarbon residue, which may contain an ether, ester, or alcohol linkage, having 2 to 20 carbon atoms and having a valency of q, and q is an integer of 2 to 6. The total amount of the composition is 100% by weight.

A further object of the invention is a polymer resin obtainable by polymerizing the stated composition.

Brief Explanation of the Drawings

The present invention will be better understood from the following description presented in connection with the accompanying drawings, in which:

Fig. 1 is an IR analysis chart of α-(β-acryloyloxy ethoxy) naphthalene obtained in Example 1, and

Fig. 2 is an IR analysis chart of α-(β-acryloyloxy ethoxy) naphthalene obtained in Example 2.

Description of the Preferred Embodiments

The naphthalene derivatives (I) according to the present invention can be prepared by various methods. Typical examples of such methods are as follows. The synthesis conditons in the following methods are those used in similar conventional methods.

(i) Monohydric alcohols having the following general formula (IV):

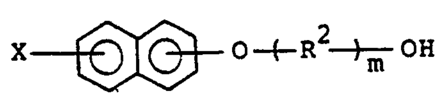

(IV)

wherein $R^2$, X, and m are as defined above are reacted with (meth)acrylic acid to effect an esterification reaction.

(ii) the monohydric alcohols having the above-mentioned general formula (IV) are reacted with lower alkyl esters of (meth)acrylic acid to effect an ester exchange reaction.

(iii) the monohydric alcohols having the above-mentioned general formula (IV) are reacted with (meth)acryloyl chloride in the presence of a base.

Monohydric alcohols represented by the general formula (IV) can be generally obtained by, for example, (a) addition reacting a substituted or unsubstituted alkylene oxide with α-naphthol, β-naphthol, a substituted derivative thereof, or a mixture thereof, or (b) addition condensation reacting a substituted or unsubstituted alkylene carbonate with α-naphthol, β-naphthol, the substituted derivative thereof, or a mixture thereof. The value m in the general formula (I) thus obtained depends upon the reaction mol ratio of the naphthols and (a) the substituted or unsubstituted alkylene oxide or (b) the substituted or unsubstituted alkylene carbonate. The substituted or unsubstituted alkylene oxides used in the synthesis of these polyoxyalkylene compounds are propylene oxide or ethylene oxide. The substituted or unsubstituted alkylene carbonates are propylene carbonate or ethylene carbonate.

In addition to the above-mentioned methods (i), (ii), and (iii), the compounds (I) can be prepared by the following methods (iv) and (v).

(iv) The above-mentioned monohydric alcohols or naphthols are reacted with glycidyl (meth)acrylates.

(v) The above-mentioned naphthols are reacted with epihalohydrin to form glycidyl ether compounds and the resultant glycidyl ether compounds are then reacted with (meth)acrylic acid.

According to the present invention, a polymerizable composition, suitable for use in the preparation of high refractive index resin, comprises compounds (I), (II), and (III).

The compounds (I) used as a monomer (A) in the present composition should be contained in an amount of 30% to 95% by weight, preferably 33% to 90% by weight, more preferably 35% to 85% by weight. Typical examples of the monomer (A) are as follows:

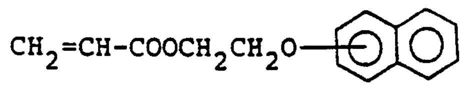

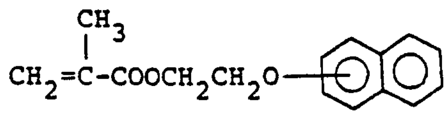

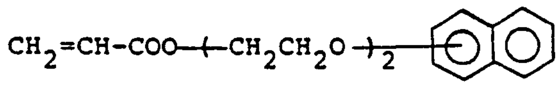

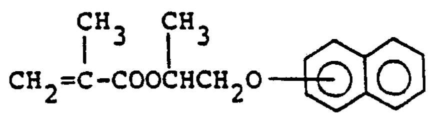

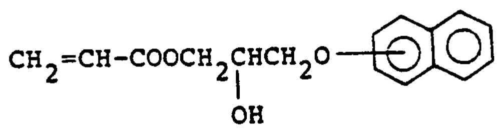

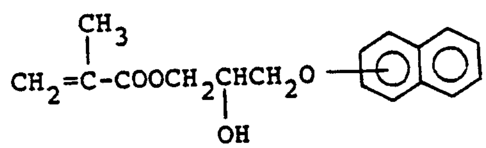

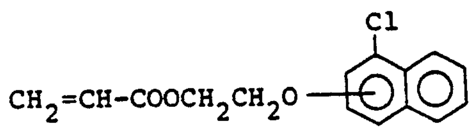

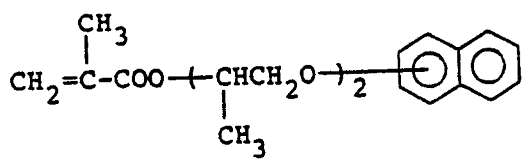

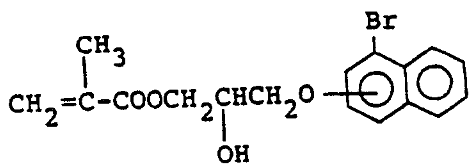

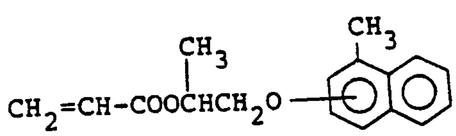

The compounds (II) used as a monomer (B) in the present composition are contained in an amount of 0% to 65% by weight. The "0% by weight" means no presence of the monomer (B) in the present composition. The presence of the monomer (B) in the present composition minimizes the separation of the products from the mold caused by the cure shrinkage and improves the toughness and sometimes the dyeing properties of the products.

Typical examples of such monomer (B) are as follows.

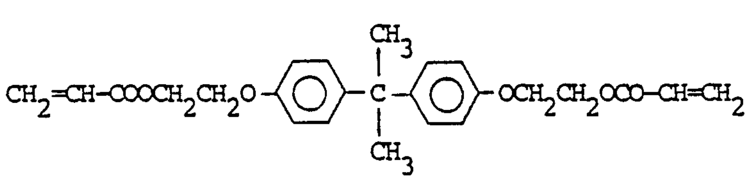

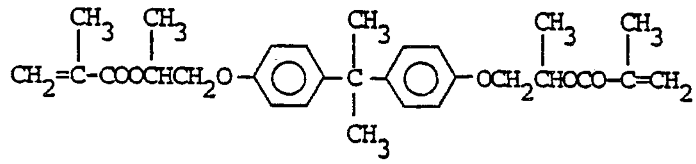

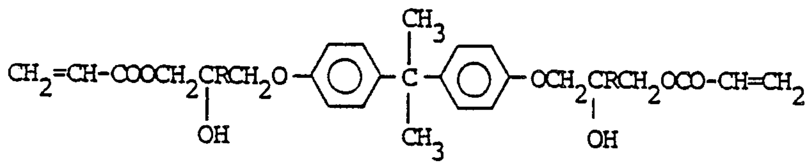

(R = H or $CH_3$)

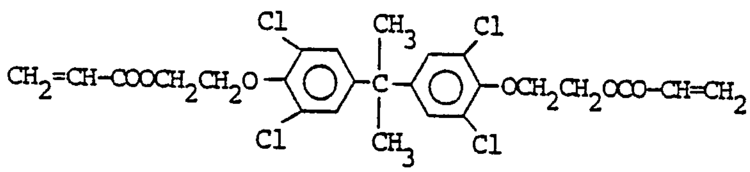

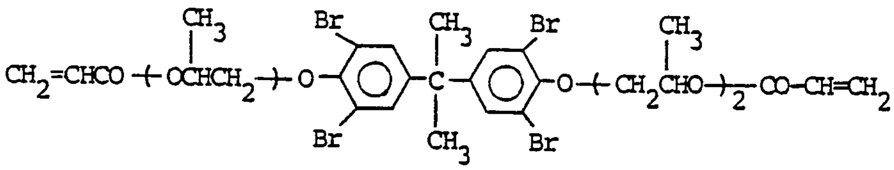

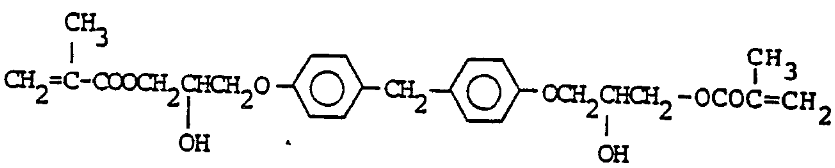

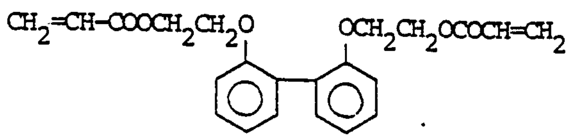

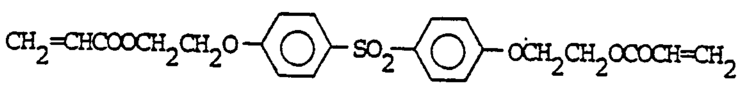

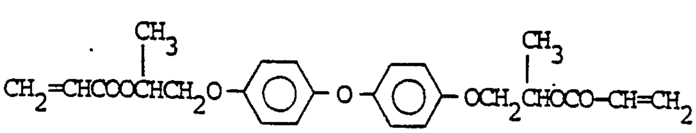

The compounds (III) used as a monomer (C) in the present composition should be contained in an amount of 5% to 30% by weight, preferably 10% to 27% by weight, more preferably 15% to 25% by weight. The use of the monomer (C) increases the Abbe nuumber of the products as well as the crosslinking density and also improves the solvent resistance and hardness of the cured copolymerization products.

Typical examples of the monomer (C) are as follows.

$$CH_2=CH-COOCH_2CH_2OCOCH=CH_2$$

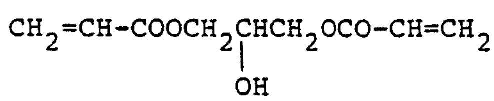

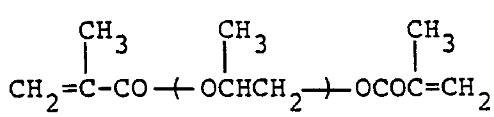

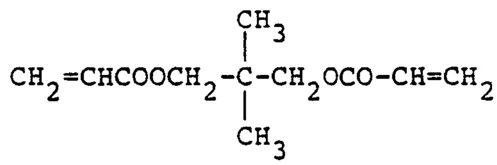

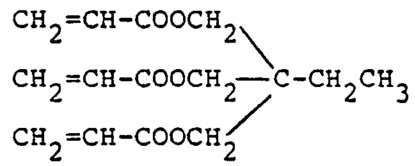

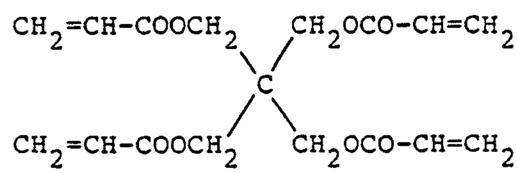

The above-mentioned mixing amounts of the monomers (A), (B), and (C) depend upon, for example, the types and the usage amount of the monomers. Generally speaking, when the amount of the monomer (A) in the composition is more than 95% by weight, the surface hardness, thermal resistance, solvent resistance, and cutting workability or processability of the cured copolymerization products are unpreferably decreased. Contrary to this, when the amount of the monomer (A) in the composition is less than 30% by weight, the impact strength and processability of the cured copolymerization products are unpreferably decreased, although the surface hardness and solvent resistance are increased.

The amount of the monomer (C) depends upon the types and the usage amount of the monomers (A) and (B) or the refractive index and the number of the functional group of the monomer (C). Generally speaking, when the amount of the monomer (C) in the composition is more than 30% by weight, the refractive index, impact strength, and processability of the cured copolymerization products are unpreferably decreased, although the Abbe number as well as the surface hardness and solvent resistance are increased. Furthermore, the use of the monomer (C) of more than 30% by weight sometimes results in the separation of the products from the cast mold by shrinkage during the curing and decreases the surface finish of the cured products.

The polymerizable composition of the present invention can be radical polymerized by using a radical polymerization initiator to produce resins having a high refractive index. Furthermore, the polymerization can be carried out by using an actinic energy ray such as ultraviolet light or gamma rays. The desired resin having a high refractive index and no optical distortion can be prepared in a short time by any method.

In particular, ultraviolet copolymerization can be advantageously used in the copolymerization of the present composition since the copolymerization can be effected in an especially short time (i.e., the productivity is extremely high) and the cured product has substantially no optical distortion.

The radical copolymerization initiators suitable for use in the thermal copolymerization of the present composition include any conventional initiators such as benzoyl peroxide, diisopropyl peroxydicarbonate, and azobisisobutyronitrile.

In the case where the present composition is subjected to ultraviolet copolymerization, any conventional photosensitizers such as benzoin, benzoin methyl ether, benzoin ethyl ether, benzoin isopropyl ether, benzoin isobutyl ether, 2-hydroxy-2-benzoyl-propane, azobisisobutyronitrile, benzyl, and thioxanthone, is useful.

The above-mentioned radical polymerization initiators or photosensitizers are preferably used in an amount of at most about 5% by weight based on the weight of the present composition. When radiation such as gamma rays is used for the copolymerization of the present composition, the use of polymerization initiators is not generally required.

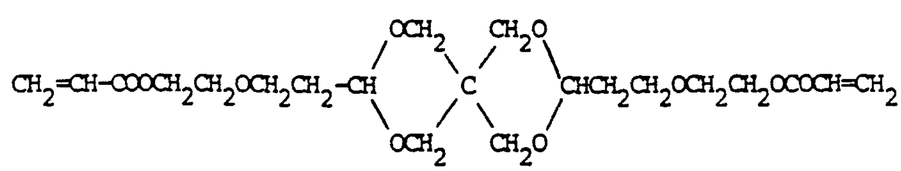

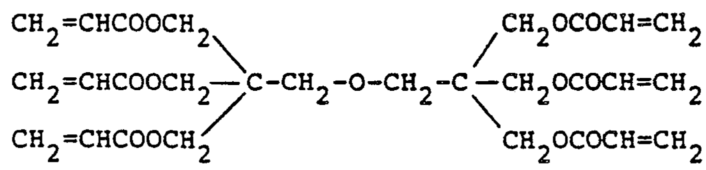

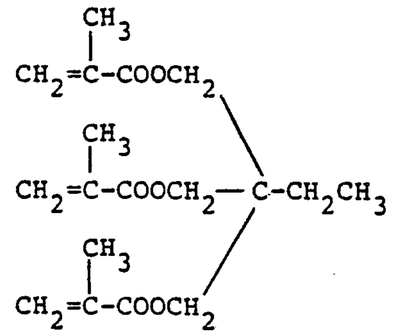

In addition to the above-mentioned monomers, other ingredients, for example, yellowing preventing agents such as triphenyl phosphine, leveling agents such as fluorine surfactants, and ultraviolet absorbers such as 2-(2-hydroxy-5-methylphenyl)-2H-benzotriazole may be used, so long as the polymerization and curing are not adversely affected.

The desired glass lenses can be manufactured from the polymerizable compositions according to the present invention as follows. That is, the polymerizable compositions are injected into casting molds for lenses composed of glass molds and gaskets, cured by means of heating or irradiation of ultraviolet light or other actinic energy rays, and then removed from the molds as products.

The resins produced from the polymerizable compositions of the present invention have a refractive index of 1.58 to 1.65, depending upon the compositions of the monomers, which is higher than those of conventional transparent thermosetting resins (urea resin = 1.54, melaminc resin = 1.55, alkyd resin = 1.54, diallylphthalate resin = 1.56, diethylene glycol bisallyl carbonate resin = 1.499). Furthermore, the transparent resins produced from the polymerizable compositions of the present invention have excellent thermal resistance and surface hardness. Therefore, the resins according to the present invention can be advantageously used as spectacle lenses and also as camera lenses, sealers for luminescent diodes, adhesives for lenses, luminous head binders, and other optical elements, decorative cast articles, and coating compositions.

## EXAMPLES

The present invention now will be further illustrated by, but is by no means limited to, the following examples, in which all percents and parts are on a weight basis unless otherwise specified.

The cast molded products obtained in the examples and comparative examples are evaluated according to the following test methods.

(1) Refractive Index

The refractive index was determined at 20°C by means of an Abbe refractometer. Bromonaphthalene was used as a contact liquid.

(2) Hardness

The hardness was determined by means of a Barcol hardness meter.

(3) Surface Conditions

The surface conditions were evaluated by visually observing the surface conditions or appearance of the top and bottom surfaces of the cast molded product according to the following criteria.

o — Smooth on both surfaces.
△ — Slight roughness was observed.
x — Roughness was observed in the entire surfaces.

(4) Light Transmittance

The light transmittance of a flat plate of the cured product having a thickness of 2 mm was determined at 550 nm.

(5) Impact Strength

The impact strength was determined, according to FDA specifications, by dropping a steel ball having a weight of 16.2 g and a diameter of 15.9 mm from 127 cm height on the center of the flat plate of the cured

product having a thickness of 2 mm.

Good — No cracks.
Poor — Cracks.

(6) Thermal Resistance

The cured product was allowed to stand at a temperature of 120°C in a hot air oven for 3 hours. The conditions of the products were visually evaluated according to the following criteria

o — No coloring, no surface distortion.
x — Surface distortion.

(7) Dyeing Property

The cured product was dipped in a 0.2% Disperse Brown-3 aqueous solution at a temperature of 92°C for 10 minutes, was thoroughly washed with water, then was dried. The dyed product was evaluated as follows.

o — Uniform dyeing.
△ — Non-uniform dyeing.

Example 1

A 575.7 g amount of α-(β-hydroxyethoxy) naphthalene, 226.3 g of acrylic acid, 2.9 g of concentrated sulfuric acid, 3.0 g of hydroquinone, and 600 ml of toluene were charged into a 2 liter 4-necked separable flask provided with an agitator, a thermometer, an air inlet, and a Dean Stark separator with a cooler. The azeotropic dehydration reaction was carried out for 7 hours.

Thus, a reaction product containing 98.2% of α-(β-acryloyloxyethoxy) naphthalene and 1.8% of byproducts was obtained. No starting material was found. A chromatograph analysis was carried out under the following conditions.

Column: Silicon OV—17 column (2 m),

| | |
|---|---|
| Injection temperature: | 300°C, |
| Column temperature: | 200°C, |
| Detector: | FID detector |
| Carrier gas: | $N_2$ 60 ml/min. |

The product obtained above was washed three times with a dilute aqueous alkali solution and then three times with distilled water. The product was dried over magnesium sulfate. The toluene was distilled off in vacuo. Thus, the desired product, α-(β-acryloyloxyethoxy) naphthalene was obtained. The boiling point of the product was 160°C/0.45 mmHg. Infrared spectrophotometric analysis using a JASCO A—3 IR spectrophotometer (manufactured by JASCO) gave the results shown in Fig. 1.

Nuclear magnetic resonance (NMR) spectroscopic analysis using TMS as an internal standard and by a JNM FX—200 (manufactured by JEOL Co.) gave the results as follows ($^1H$ = 200 MHz, $^{13}C$ = 50 MHz).

$n_D^{20}$ = 1.586

$^1H$—NMR: δ ($CDCl_3$ ppm 4.13 (2H, t, J=5Hz), 4.51 (2H, t, J=5Hz), 5.70 (1H, dd, J=2, 10Hz), 6.09 (1H, dd, J=10, 17Hz), 6.39 (1H, dd, J=2, 17Hz), 6.61 (1H, dd, J=1, 8Hz), 7.35 (4H, m), 7.71 (1H, dd, J=3.5, 6Hz), 8.25 (1H, dd, J=3.5, 6Hz)

$^{13}C$—NMR: δ($CDCl_3$) ppm 62.7 (t), 66.1 (t), 104.9 (d), 120.7 (d), 122.0, (d), 125.3 (d), 125.6 (s), 125.7 (d), 126.4 (d), 127.4 (d), 128.1 (d), 131.0 (t), 134.5 (s), 154.2 (s), 165.9 (s)

Example 2

The reaction was carried out by using, as starting materials, 564.7 g of β-(β-hydroxyethoxy) naphthalene, 226.3 g of acrylic acid, and 5.1 g of p-toluene sulfonic acid in 600 ml of toluene in the reaction flask used in Example 1. The reaction was carried out for 10 hours. The reaction product was washed with an alkali solution. The toluene was distilled off in vacuo and the residue was recrystallized from cyclohexane.

Thus, the desired product, β-(β-acryloyloxyethoxy) naphthalene was obtained. Infrared absorption spectrophotometric analysis gave the results shown in Fig. 2. The melting point was 59°C to 71°C. NMR analysis gave results as follows.

$^1H$—NMR: δ ($CDCl_3$) ppm 4.23 (2H, t, J=5Hz), 4.52 (2H, t, J=5Hz), 5.79 (1H, dd, J=2, 11Hz), 6.14 (1H, dd, J=11, 17Hz), 6.43 (1H, dd, J=2, 17Hz), 7.13 (2H, m), 7.36 (2H, m), 7.70 (3H, m)

$^{13}C$—NMR: δ($CDCl_3$) ppm 62.9 (t), 65.9 (t), 106.9 (d), 118.8 (d), 123.8 (d), 126.4 (d), 126.8 (d), 127.6 (d), 128.1 (d), 129.2 (s), 129.5 (d), 131.2 (t), 134.4 (s), 156.5 (s), 166.0 (s)

Example 3

The reaction was carried out for 10 hours in the same manner as in Example 1, except that 941.1 g of α-(ω-hydroxypropoxy) naphthalene and 284.4 g of methacrylic acid were used as starting materials. The desired α-(ω-methacryloyloxypropoxy) naphthalene $R^1 = CH_3$, $R^2 = —CH(CH_3)CH_2O—$, and m = 2 in the general formula (I) was obtained.

The analysis results obtained in the same manner as in Example 1 are as follows.

$n_D^{20} = 1.554$

B.P.: 200°C or more/0.5 mmHg

IR ($cm^{-1}$)

Ester 1725 (C = O)

Terminal methylene 1650 (C = C), 1410 (CH in plane), 890 (CH out of plane)

Ether 1080

Methyl group 1380

Naphthyl 1600, 1510, 800 (adjacent 3H), 770 (adjacent 4H)

$^1H$—NMR: $\delta(CDCl_3)$ ppm 1.24 (3H, d, J=7Hz), 1.27 (3H, d, J=7Hz), 1.98 (3H, d, J=2Hz), 3.7—4.4 (6H, m), 6.62 (1H, dd, J=1, 8Hz), 7.30 (4H, m), 7.72 (1H, dd, J=3.5, 6Hz), 8.25 (1H, dd, J=3.5, 6Hz)

Example 4

A 501.4 g amount of an epoxy compound having a boiling point of 173°C to 175°C/0.4 mmHg and an epoxy equivalent of 204 obtained from the condensation of epichlorohydrine and β-naphthol in the presence of aqueous caustic soda was charged, together with 168.5 g of acrylic acid, 4.0 g of lithium chloride, and 0.3 g of hydroquinone monomethyl ether, into a 2 liter 4-necked separable flask provided with an agitator, a thermometer, an air inlet, and a cooler. The reaction was carried out at a temperature of 110°C to 120°C, while air was introduced, until the acid number became 3 or less. Thus, the desired product essentially consisting of β-(3-acryloyloxy-2-hydroxypropoxy) naphthalene [i.e., $R^1$ = H, $R^2$ = $—CH_2CH(OH)CH_2O—$, and m = 1 in the general formula (I)].

The analysis of the desired product gave the results as follows.

$n_D^{20} = 1.597$

B.P.: 200°C or more/0.5 mmHg

IR ($cm^{-1}$)

Ester 1725 (C = O)

Terminal vinyl 1640 (C = C), 1415 (CH in plane), 980 (CH out of plane)

Ether 1120

Naphthyl 1590, 1510, 840 (adjacent 2H), 760 (adjacent 4H)

Alcohol 3400

$^1H$—NMR: $\delta(CDCl_3)$ ppm 2.80 (1H, brs), 3.8—4.2 (5H, m), 5.71 (1H, dd, J=2, 10Hz), 5.97 (1H, dd, J=10, 17Hz), 6.33 (1H, dd, J=2, 17Hz), 7.14 (2H, m), 7.37 (2H, m), 7.70 (3H, m)

Example 5

The reaction was carried out in the same manner as in Example 1, except that 552.5 g of α-(ω-hydroxydiethoxy) naphthalene and 317.1 g of acrylic acid were used as starting materials. Thus, the desired α-(ω-acryloyloxydiethoxy) naphthalene [i.e., $R^1$ = H, $R^2 = —CH_2CH_2O—$, and m = 2 in the above-mentioned general formula (I)].

Analysis of the desired product by the same manner as in Example 1 gave the results as follows.

$n_D^{20} = 1.535$

B.P.: 200°C or more/0.5 mmHg

IR ($cm^{-1}$)

Ester 1725 (C = O)

Terminal methylene 1650 (C = C), 1415 (CH in plane), 870 (CH out of plane)

Ether 1115

Methyl group 1370

Naphthyl 1610, 1520, 790 (adjacent 3H), 760 (adjacent 4H)

$^1H$—NMR: $\delta(CDCl_3)$ ppm 1.99 (3H, d, J=2Hz), 4.2 (4H, m), 4.5 (4H, m), 5.68 (1H, dd, J=2, 10Hz), 5.88 (2H, m), 7.35 (4H, m), 7.70 (1H, dd, J=3.5, 6Hz), 8.21 (1H, dd, J=3.5, 6Hz)

Example 6

The reaction was carried out in the same manner as in Example 1, except that 640.7 g of β-(ω-hydroxytripropoxy) naphthalene and 189.4 g of methacrylic acid were used as starting materials. Thus, the desired product, β-(ω-methacryloyloxytripropoxy) naphthalene [i.e., $R^1 = —CH_3$, $R^2 = —CH(CH_3)CH_2O—$, and m = 3 in the general formula (I)] was obtained.

Analysis of the desired product by the same manner as in Example 1 gave the results as follows.

$n_D^{20} = 1.529$

B.P.: 200°C or more/0.5 mmHg

IR ($cm^{-1}$)

Ester 1725 (C = O)

Terminal vinyl 1645 (C = C), 1415 (CH in plane), 970 (CH out of plane)
Ether 1090
Methyl group 1380
Naphthyl 1600, 1520, 840 (adjacent 2H), 770 (adjacent 4H)

$^1$H—NMR: δ($CDCl_3$) ppm 1.23 (3H, d, J=7Hz), 1.24 (3H, d, J=7Hz), 1.27 (3H, d, J=7Hz), 3.6—4.8 (9H, m), 5.83 (1H, dd, J=2, 11Hz), 6.21 (1H, dd, J=11, 17Hz), 6.38 (1H, dd, J=2, 17Hz), 7.15 (2H, m), 7.35 (2H, m), 7.70 (3H, m)

### Example 7

A 75 part amount of α-(β-acryloyloxyethoxy) naphthalene obtained in Example 1, 25 parts of dipentaerythritol, 1.0 part of 2-benzoyl-2-hydroxypropane, 0.1 part of triphenylphosphine as a yellowing preventing agent, and 0.2 part of 2-(2-hydroxy-4-methylphenyl) benzotriazol as a ultraviolet absorber were mixed together to prepare a uniform mixture.

The mixture was injected into glass cast molds for spectacle lenses. After degassing, the top and bottom surfaces were independently irradiated for 10 seconds from 10 cm distance by means of a 2 KW high pressure mercury vapor lamp.

The cured products were recovered from the molds and were thermally treated at a temperature of 100°C for one hour in an oven. Thus, clear spectacle lenses having no optical distortion were obtained.

The physical properties of the spectacle lenses thus obtained were as follows.

| | |
|---|---|
| Refractive index: | 1.610 |
| Hardness (Rockwell hardness): | 115 |
| Surface condition: | Smooth in both surfaces |
| Light transmittance: | 91 |
| Impact strength: | No crack |
| Thermal resistance: | No coloring and no surface distortion |
| Dyeing property: | Uniform dyeing |

### Example 8

An 80 part amount of α-(β-acryloyloxyethoxy) naphthalene, 20 parts of dipentaerythritol hexacrylate, 0.1 part of 2-benzoyl-2-hydroxypropane, 0.1 part of triphenylphosphine as a yellowing preventing agent, and 0.03 part of 2-(2-hydroxy-5-methylphenyl)-2H-benzotriazole were mixed together to form a uniform mixture.

The uniform mixture was injected into glass cast molds for spectacle lenses. After degassing, the top and bottom surfaces were irradiated from a 20 cm distance for 20 seconds in total by means of a 3 kW high pressure mercury vapor lamp having a lamp inlet power of 80 W/cm.

The cured products were recovered from the molds and were thermally treated at a temperature of 100°C for one hour in an oven. Thus, clear lenses having no optical distortion were obtained.

The physical properties of the lenses thus obtained are shown in Table 1.

### Examples 9 to 13

The cast molding of Example 8 was repeated except that the monomer compositions listed in Table 1 were used.

The results are shown in Table 1.

### Example 14 (Comparative)

Ultraviolet light polymerization was carried out in the same manner as in Example 8, except that CR—39 (i.e., diethyleneglycol bisallylcarbonate), which is conventionally used as a monomer for the production of organic lenses, was used. However, after the 10 minute irradiation, only soft gel was obtained and cured products usable as lenses were not obtained.

### Examples 15 and 16 (Comparative)

The cast molding of Example 8 was repeated, except that monomer compositions outside of the present range and listed in Table 1 were used.

The results are shown in Table 1.

As is clear from the results shown in Table 1, the resins obtained from the polymerizable compositions according to the present invention are extremely suitable for use as resins having a high refractive index and can be widely used in various application fields.

Table 1

| Example No. | Monomer composition (%) | | | Physical properties | | | | | | | |
|---|---|---|---|---|---|---|---|---|---|---|---|
| | Monomer A | Monomer B | Monomer C | Refractive index | Color | Hardness | Impact strength | Surface condition | Light transmittance | Thermal resistance | Dyeing |
| 8 | AEN 80 | - | DPHA 20 | 1.610 | Colorless | BS 85<br>BH 35 | Good | o | 90 | o | o |
| 9 | AEN 60 | BPAEA 35 | TMPTA 5 | 1.595 | " | BS 85<br>BH 30 | " | o | 91 | o | o |
| 10 | AEN 40 | BPAEA 40 | DPHA 20 | 1.584 | " | BS 85<br>BH 35 | " | o | 90 | o | o |
| 11 | AEN 35 | BPAPA 50 | PETA 15 | 1.591 | " | BS 85<br>BH 30 | " | o | 89 | o | o |
| 12 | AEN 60 | OBEA 35 | TMPTA 5 | 1.600 | " | BS 85<br>BH 30 | " | o | 91 | o | o |
| 13 | AEN 40 | OBEA 40 | DPHA 20 | 1.593 | " | BS 85<br>BH 35 | " | o | 90 | o | o |
| 14*1 | CR-39 100 | - | - | Only gel was formed after 10 minute irradiation | | | | | | | |
| 15*1 | AEN 60 | BPAEA 5 | DPHA 35 | 1.582 | Colorless | BS 85<br>BH 35 | Poor | Δ | 91 | o | Δ |
| 16*1 | AEN 97 | - | DPHA 3 | 1.607 | " | BS 85<br>BH 25 | Good | o | 90 | x | o |

Note)
AEN: α-(β-acryloyloxyethoxy) naphthalene
DPHA: Dipentaerythritol hexacrylate
TMPTA: Trimethylolpropane triacrylate
PETA: Pentaerythritolpropane triacrylate
BPAEA: 2,2-Bis[4-(β-acryloyloxyethoxy) phenyl]] propane
BPAPA: Epoxyacrylate used in Example 9
OBEA: 2,2'-Bis(β-acryloyloxyethoxy) biphenyl]
BS: Barcoal hardness (soft)
BH: Barcoal hardness (hard)
*1: Comparative Example

Example 17

A 50 part amount of α-(β-acryloyloxyethoxy) naphthalene, 50 parts of epoxy acrylate obtained from the reaction of (a) 1 mol of an epoxy resin having an epoxy equivalent of 190 manufactured by the condensation of bisphenol A and epichlorohydrine with (b) 2 mols of acrylic acid at 120°C in the presence of a lithium chloride catalyst, 10 parts of dipentaerythritol hexaacrylate, 0.1 part of 2-benzoyl-2-hydroxypropane, and 0.1 part of tris-(n-octyl) phosphite as a yellowing preventing agent were mixed and thoroughly stirred to form a uniform solution.

The resultant solution was injected into glass molds for the production of luminous diode sealer and was then dipped GaP diode elements connected to substrates by lead-out wires. After degassing, the molds were irradiated by a 3 kW high pressure mercury vapor lamp having a lamp input power of 80 W/cm. The solution was completely cured in 10 seconds, and a clear cured sealer having a refractive index of 1.596 was obtained.

**Claims**

1. A naphthalene derivative having the general formula:

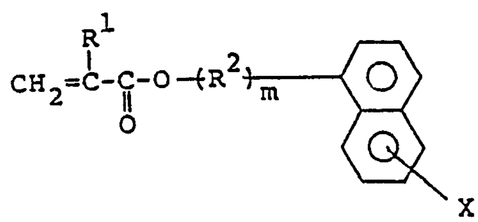

(I')

wherein $R^1$ is H, $R^2$ is $-CH_2CH_2O-$, or $-CH(CH_3)CH_2O-$, X is H, Cl, Br, $CH_3$, $CH_3O$, $C_6H_5$, or $C_6H_5O$, and m is an integer of 1 to 3.

2. A naphthalene derivative as claimed in claim 1, wherein X of the general formula (I') is hydrogen).

3. A naphthalene derivative as claimed in claim 1, wherein said derivative is selected from the group consisting of α-(β-acryloyloxyethoxy) naphthalene, or α-(ω-acryloyloxydiethoxy) naphthalene.

4. A polymerizable composition suitable for use in the preparation of a high refractive index resin comprising:

(A) 30% to 95% by weight of at least one monomer having the general formula:

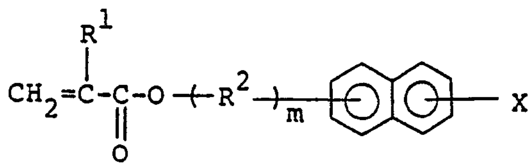

(I)

wherein $R^1$ is H or $CH_3$, $R^2$ is $-CH_2CH_2O-$, $-CH(CH_3)CH_2O-$, or $-CH_2CH(OH)CH_2O-$, X is H, Cl, Br, $CH_3$, $CH_3O$, $C_6H_5$, or $C_6H_5O$, and m is an integer of 1 to 3;

(B) 0% to 65% by weight of at least one monomer having the general formula:

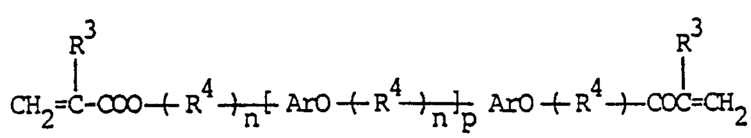

(II)

wherein $R^3$ is H or $CH_3$, $R^4$ is $-CH_2-CH_2O-$, $-CH(CH_3)CH_2O-$, or $-CH_2CH(OH)CH_2O-$, Ar is a bivalent phenol residue, n is an integer of 1 to 3, p is an integer of 0 to 4, provided that p = 0 in the case of $R^4$ = $-CH_2CH_2O-$ or $-CH(CH_3)CH_2O-$; and

(C) 5% to 30% by weight of at least one monomer having a refractive index of at least 1.450 and having the general formula:

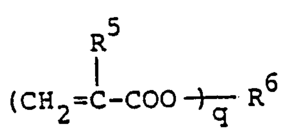

(III)

wherein $R^5$ is H or $CH_3$, $R^6$ is a saturated aliphatic hydrocarbon residue, which may contain an ether, ester,

or alcohol linkage, having 2 to 20 carbon atoms and having a valency of q, and q is an integer of 2 to 6, the total amount of the composition being 100% by weight.

5. A polymerizable composition as claimed in claim 4, wherein X of the general formula (I) is hydrogen.

6. Polymer resin having a high refractive index, obtainable by polymerizing a polymerizable composition according to claim 4 or claim 5.

**Patentansprüche**

1. Naphthaliniderivat der allgemeinen Formel

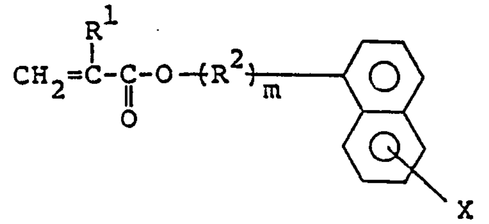

(I')

in der $R^1$ für H, $R^2$ für $-CH_2CH_2O-$ oder $-CH(CH_3)CH_2O-$, X für H, Cl, Br, $CH_3$, $CH_3O$, $C_6H_5$ oder $C_6H_5O$ steht und m eine ganze Zahl von 1 bis 3 ist.

2. Naphthalinderivat gemäß Anspruch 1, worin X in der allgemeinen Formel (I') Wasserstoff bedeutet.

3. Naphthalinderivat gemäß Anspruch 1, wobei dieses Derivat unter α-(β-Acryloyloxyethoxy)-naphthalin oder α-(ω-Acryloyloxydiethoxy)-naphthalin ausgewählt wird.

4. Polymerisierbare Zusammensetzung, die sich für die Herstellung eines Harzes mit hohem Brechungsindex eignet, enthaltend:

(A) 30 bis 95 Gew.-% mindestens eines Monomeren der allgemeinen Formel:

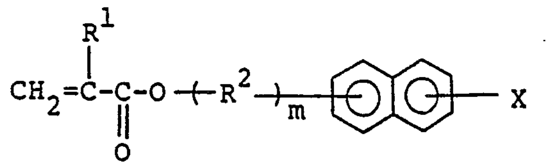

(I)

in der $R^1$ für H oder $CH_3$, $R^2$ für $-CH_2CH_2O-$, $-CH(CH_3)CH_2O-$ oder $-CH_2CH(OH)CH_2O-$, X für H, Cl, Br, $CH_3$, $CH_3O$, $C_6H_5$ oder $C_6H_5O$ steht und m eine ganze Zahl von 1 bis 3 ist;

(B) 0 bis 65 Gew.-% mindestens eines Monomeren der allgemeinen Formel:

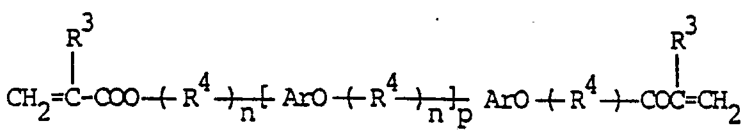

(II)

worin $R^3$ für H oder $CH_3$, $R^4$ für $-CH_2-CH_2O-$, $-CH(CH_3)CH_2O-$ oder $-CH_2CH(OH)CH_2O-$ steht, Ar ein zweiwertiger Phenolrest, n eine ganze Zahl von 1 bis 3, p eine ganze Zahl von 0 bis 4 ist, mit der Maßgabe, daß $p = 0$ wenn $R^4 = -CH_2CH_2O-$ oder $-CH(CH_3)CH_2O-$; und

(C) 5 bis 30 Gew.-% mindestens eines Monomeren, das einen Brechungsindex von mindestens 1,450 hat und die allgemeine Formel hat:

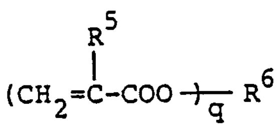

(III)

worin $R^5$ für H oder $CH_3$ steht, $R^6$ ein gesättigter aliphatischer Kohlenwasserstoffrest ist, der eine Ether-, Ester- oder Alkoholbindung enthalten kann und eine Wertigkeit von q hat, und q eine ganze Zahl von 2 bis 6 ist, wobei die Gesamtmenge der Zusammensetzung 100 Gew.-% beträgt.

5. Polymerisierbare Zusammensetzung gemäß Anspruch 4, wobei X in der allgemeinen Formel (I) Wasserstoff ist.

6. Polymerharz mit hohem Brechungsindex, erhältlich durch Polymerisation einer polymerisierbaren Zusammensetzung gemäß Anspruch 4 oder 5.

**Revendications**

1. Dérivé du naphtaléne de formule générale.

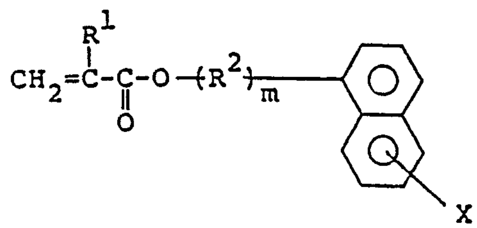

(I')

où $R^1$ représente H, $R^2$ représente $—CH_2CH_2O—$, ou $—CH(CH_3)CH_2O—$, X représente H, Cl, Br, $CH_3$, $CH_3O$, $C_6H_5O$ ou $C_6H_5O$, et m est un nombre entier de 1 à 3.

2. Dérivé du naphtaléne selon la revendication 1, où X de la formule générale (I')est l'hydrogéne.

3. Dérivé du naphtaléne selon la revendication 1, our ledit dérivé est choisie dans le groupe constitué par l'α-(β-acryloyloxyéthoxy)naphtaléne ou l'α-(ω-acryloyloxydiéthoxy)naphtalène.

4. Composition polymérisable adaptée à l'utilisation dans la préparation d'une resine à indice de réfraction éleve, comprenant:

(A) 30% à 95% en poids d'au moins un monomère de formule générale:

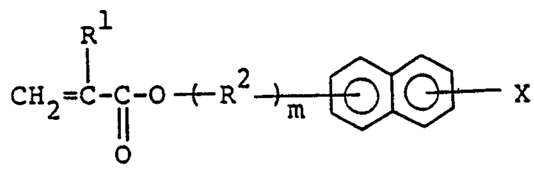

(I)

où $R^1$ represente H ou $CH_3$, $R^2$ représente $—CH_2CH_2O—$, $—CH(CH_3)CH_2O—$, ou $CH_2CH(OH)CH_2O—$, X représente H, Cl, Br, $CH_3$, $CH_3O$, $C_6H_5$ ou $C_6H_5O$, et m est un nombre entier de 1 à 3:

(B) 0% à 65% en poids d'au moins un monomére de formule générale:

$$CH_2=C(R^3)-COO-(R^4)_n-[ArO-(R^4)_n]_p\ ArO-(R^4)-COC(R^3)=CH_2 \qquad (II)$$

où $R^3$ représente H ou $CH_3$, $R^4$ représente $—CH_2CH_2O—$, $—CH(CH_3)CH_2O—$, ou $CH_2CH(OH)CH_2O—$, Ar est un reste phénol bivalent, n est un nombre entier de 1 à 3, p est un nombre entier de 0 à 4, étant entendu que p=0 dans le cas où $R^4 = CH_2CH_2O—$ ou $—CH(CH_3)CH_2O—$, (de plus, dans le cas où $R^4 = —CH_2CH(OH)CH_2O—$, n vaut de préference 1); et

(C) 5% à 30% en poids d'au moins un monomére ayant un indice de réfraction d'au moins 1,450 et répondant à la formule générale:

$$(CH_2=C(R^5)-COO)_q\ R^6 \qquad (III)$$

où $R^5$ représente H ou $CH_3$, $R^6$ représente un groupe hydrocarbone aliphatique saturé qui peut contenir une liaison éther, ester ou alcool, comportant 2 à 20 atomes de carbone, et ayant une valence de q, et q est un nombre entier de 2 à 6, le total de la composition étant de 100% en poids.

5. Composition polymérisable selon la revendication 4, où X de la formule générale (I) est l'hydrogéne.

6. Résine polymère ayant un indice de réfraction élevé, pouvant être obtenu par polymerisation d'une composition polymerisable selon la revendication 4 ou la revendication 5.

Fig. 1

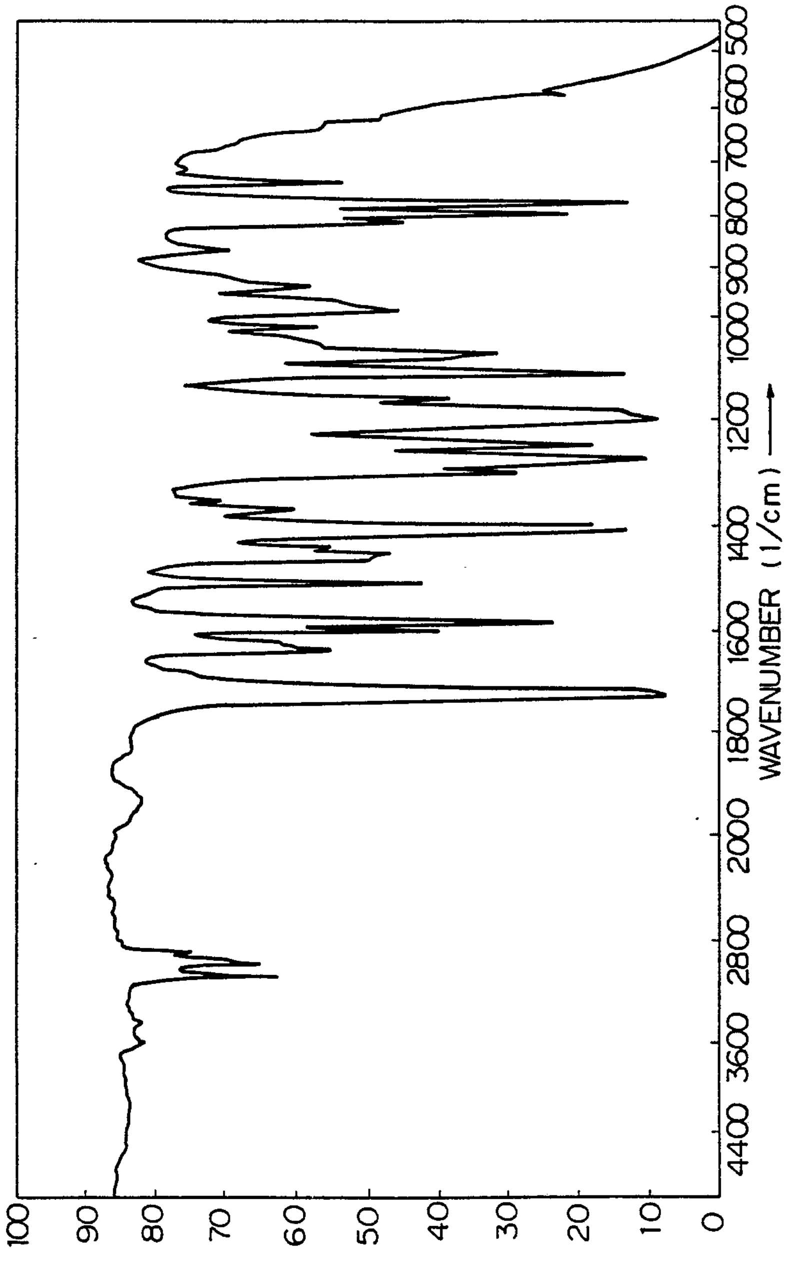
100
90
80
70
60
50
40
30
20
10
0
4400
3600
2800
2000
1800
1600
1400
1200
1000
900
800
700
600
500
WAVENUMBER (1/cm)

Fig. 2

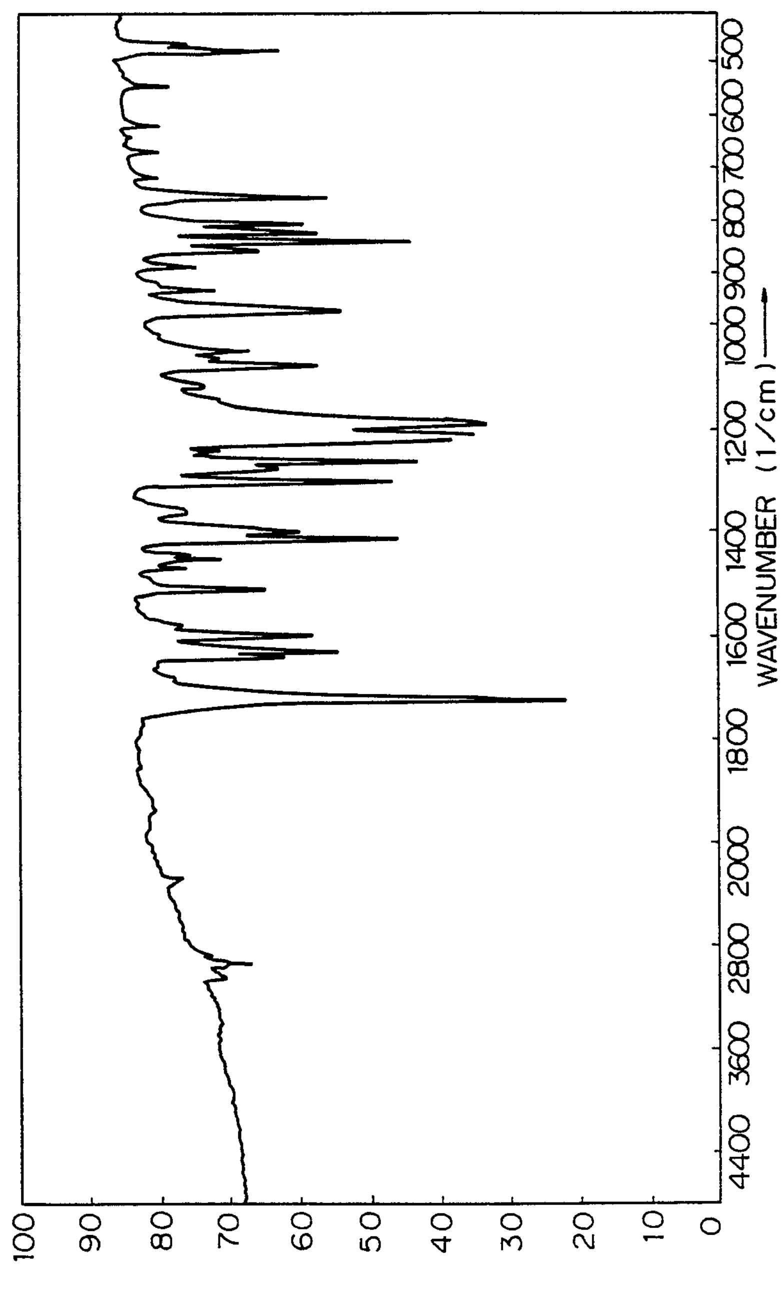
100
90
80
70
60
50
40
30
20
10
0
4400
3600
2800
2000
1800
1600
1400
1200
1000
900
800
700
600
500
WAVENUMBER (1/cm)